# EUROPÄISCHE PATENTSCHRIFT

(11) **EP 2 941 464 B1**
(45) Veröffentlichungstag und Bekanntmachung des Hinweises auf die Patenterteilung: **15.02.2017**
(21) Anmeldenummer: 13783918.9
(22) Anmeldetag: 29.10.2013
(51) Int. Cl.: C09J 7/04

(54) **AUF SICH SELBST WICKELBARES, QUEREINREISSBARES, TEXTILES TECHNISCHES KLEBEBAND MIT EINEM GEWIRKTEN TRÄGER**
SELF-WINDABLE, CROSS-TEARABLE, TEXTILE, INDUSTRIAL ADHESIVE TAPE HAVING A KNITTED BACKING
BANDE ADHÉSIVE TEXTILE ENROULABLE SUR ELLE-MÊME, DÉCHIRABLE TRANSVERSALEMENT, MUNIE D'UN SUPPORT EN TRICOT

(30) Priorität: 30.10.2012 DE 202012104161 U
(43) Veröffentlichungstag der Anmeldung: 11.11.2015
(73) Patentinhaber: Coroplast Fritz Müller GmbH & Co. KG, 42279 Wuppertal (DE)
(72) Erfinder: LODDE, Christoph, 59439 Holzwickede (DE); WITTIG, Gülay, 44799 Bochum (DE); VORWERK, Guido, 48231 Warendorf (DE)
(74) Vertreter: Patent- und Rechtsanwälte Dr. Solf & Zapf
(86) Internationale Anmeldenummer: PCT/EP2013/072624
(87) Internationale Veröffentlichungsnummer: WO 2014/067953

(56) Entgegenhaltungen:
- EP-A1- 1 433 885
- DE-A1-102008 062 312
- US-A- 1 661 055

## Beschreibung

Die vorliegende Erfindung betrifft ein auf sich selbst wickelbares, quereinreißbares, textiles technisches Klebeband, mit einem bandförmigen Träger, der eine Dicke im Bereich von 0,1 mm bis 1,8 mm aufweist, aus einem Gewirk mit aus Garn gebildeten Maschen besteht, und der auf einer Seite mit einer druckempfindlichen Klebebeschichtung versehen ist, welche mit einem spezifischen Flächengewicht im Bereich von 20 g/m² bis 300 g/m² unmittelbar auf den Träger aufgebracht ist.

In dem deutschen Gebrauchsmuster DE 299 00 924 U1 ist ein Velours-Klebeband beschrieben, das zur Befestigung an einem komplementären Klettverschlussteil, insbesondere zum Bandagieren von langgestrecktem Gut, wie einem Kabelsatz für ein Automobil, dient und einen bandförmigen textilen Träger umfasst, der auf seiner Oberseite klettfähige Schlaufen aufweist und auf dessen Unterseite eine Grundierungsschicht und auf der Grundierungsschicht eine selbstklebende Schicht aufgetragen ist. Die Grundierungsschicht weist ein spezifisches Flächengewicht - auch als Grammatur bezeichnet - von weniger als etwa 20 g/m² auf. Der Träger kann aus einem Kettengewirk bestehen. Für seine Materialdicke ist ein Bereich von etwa 0,8 mm bis 2,0 mm und für sein spezifisches Flächengewicht ein Bereich von etwa 120 g/m² bis 220 g/m² offenbart. Das bekannte Klebeband stellt ein relativ festes Material dar, insofern der Träger in Längsrichtung eine Reißfestigkeit von etwa 100 N/cm bis 200 N/cm aufweist.

Bei einem Klebeband, das aus der DE 101 02 927 A1 bekannt ist, handelt es sich um ein Klebeband zum Ummanteln von beispielsweise Kabeln in Automobilen, Rohren oder dergleichen zumeist langgestreckten Objekten. Das Klebeband ist in seinem grundsätzlichen Aufbau ebenfalls mit einem Trägerband auf Veloursbasis und einer wenigstens bereichsweise auf das Trägerband aufgebrachten Klebebeschichtung ausgerüstet. Das Klebeband kann ebenfalls auf der Basis eines Gewirks hergestellt werden. Dadurch, dass das Trägerband eine Maschendichte im Bereich von etwa 25000 pro dm² bis 50000 pro dm² besitzt, lässt sich die Klebebeschichtung direkt auf das Trägerband aufbringen, d. h. im Gegensatz zu dem Klebeband gemäß DE 299 00 924 U1 ist keine Grundierungsschicht vorgesehen. Auch dieses bekannte Klebeband besteht aus einem relativ festen Material, da der Träger in Längsrichtung ebenfalls eine Reißfestigkeit von etwa 100 N/cm bis 200 N/cm aufweist.

Die Verarbeitung von Klebebändern kann entweder mit der Hand oder über Wickelautomaten erfolgen. Bei der Verarbeitung von Hand ist in manchen Bereichen eine leichte Einreißbarkeit gewünscht, um das Verletzungsrisiko durch zu verwendende Messer oder Schneidwerkzeuge zu vermeiden. Handeinreißbare Klebebänder können im Vergleich zu nicht handeinreißbaren Klebebändern schneller appliziert werden, so dass der Anwender durch die Verwendung von handeinreißbaren Klebebändern eine höhere Produktivität erzielen kann. Die vorstehend beschriebenen Klebebänder sind aufgrund ihrer hohen Festigkeit nicht handeinreißbar.

Für von Hand einreißbare textile Klebebänder werden bis heute weithin folgende Träger eingesetzt: Zellwoll-Gewebe, Zellwoll-Gewebe mit Acrylatbeschichtung, Polyester-Gewebe, Polyester-Nähvliese, wasserstrahlverfestigte Vliese, Nadelvliese u. a. Insbesondere Zellwoll-Gewebeklebebänder haben den Nachteil, dass sie aufgrund des Zellwoll-Gewebes teuer und verrottbar sind. Dies trifft auch auf Zellwoll-Gewebe mit Acrylatbeschichtung zu, wobei die Acrylatbeschichtung des Trägers den Fertigungsaufwand noch erhöht.

Die Polyester-Gewebeklebebänder weisen ebenfalls den Nachteil auf, dass sie aufgrund des eingesetzten Gewebes teuer sind, wobei der Preis den Herstellungsaufwand des Bandes einschließlich dessen Trägermaterials widerspiegelt. In Abhängigkeit vom verwendeten Garntyp lassen sich diese Bänder von Hand einreißen oder auch nicht. Polyester-, insbesondere PET-Gewebeklebebänder, sind im Wesentlichen auch durch eine hohe Reißfestigkeit gekennzeichnet. Es gibt vereinzelt Produkte mit dichter und geschlossener Struktur, die sich von Hand einreißen lassen. Bei Geweben mit offener und damit durchlässige Struktur erschwert diese Eigenschaft die Beschichtung mit Klebstoff sehr stark, insbesondere mit UV-vernetzbaren Acrylatklebstoffen, da solche Klebstoffe unvernetzt und mit hohem Fließvermögen auf das Gewebe aufgebracht werden.

Bei der Herstellung von PET-Gewebe folgt man im Allgemeinen den Verfahrensschritten a) Weben, b) Waschen, c) Thermofixieren und d) Kalandrieren.

PET-Nähvliese haben den Nachteil, dass sie eine relativ geringe Festigkeit besitzen. Werden Materialien mit höherer Festigkeit benötigt, muss das Flächengewicht erhöht werden, was sich negativ auf die Einreißbarkeit und den Preis auswirkt. Außerdem erhöht sich die Schichtdicke bei Erhöhung des Flächengewichtes erheblich, so dass diese Bänder nicht überall eingesetzt werden können. Träger auf Spinnvliesbasis lassen sich in der Regel nicht oder nur schwer von Hand einreißen und weisen trotzdem nur geringe Festigkeiten auf. Außerdem verjüngen sie stark beim Abreißen, was vom Anwender nicht erwünscht ist.

Aus der EP 1 433 885 A1 ist ein auf sich selbst wickelbares Klebeband der eingangs genannten Art mit einem nicht aus Gewebe oder Vlies, sondern aus einem Gewirk bestehenden bandförmigen Träger bekannt, mit welchem bei wenig aufwändiger Herstellungsweise eine Handeinreißbarkeit erzielt werden kann. Bei diesem bekannten Klebeband weist der Träger eine Materialdicke von 0,1 mm bis 1,0 mm und ein spezifisches Flächengewicht im Bereich von 40 bis 200 g/m² auf und ist florfrei ausgebildet. Die Klebebeschichtung kann dabei ohne Grundierung auf den Träger aufgebracht werden, wobei durch das Gewirk mindestens eine glatte - optisch durch ein Glänzen angezeigte - Trägerseite erhalten wird, die eine optimale Haftung des Klebstoffes auf dem Untergrund gewährleistet. Eine florfreie Ausbildung bedeutet dabei, dass dieses bekannte Klebeband - unter dem Gesichtspunkt, dass sich textile Flächengebilde grundsätzlich in Flach- oder Glattwaren, wie Gewebe, Vliese, glatte Gewirke, und in Flor- oder Polwaren, wie Velours, Samt, Plüsch etc., unterteilen lassen - kein sogenannter Polstoff ist, wie er in der DIN 62055 als textiles Flächengebilde mit ein- oder beidseitig aus einer Grundschicht herausragenden polschichtbildenden Fäden oder Fasern definiert ist, sondern eine Flachware. Bei dem bevorzugt eingesetzten Gewirk des Trägers handelt es sich um ein solches, das entsprechend seiner Bindungsart blockierte Maschen aufweist, wobei diese Art der Legung als eine Kombination der Grundlegungen Franse und Samt bezeichnet werden kann. Das bekannte Klebeband hat sich in der Praxis bewährt, jedoch hat es sich gezeigt, dass es, insbesondere bei geringen Trägergrammaturen, nachteiligerweise im Herstellungsprozess des Bandes zu Schwierigkeiten bei einer Direktbeschichtung mit Klebstoff kommen kann, so dass bevorzugt eine Transferbeschichtung eingesetzt werden muss. Des Weiteren kann es aufgrund eines Einspringens der Maschen des Gewirks unter Zugspannung bei der Verarbeitung zu Verjüngungen des Bandes kommen. Ebenso kommt es bei der Verarbeitung des Wirkwarenklebebandes aufgrund der starken Dehnung zu ungleichmäßigen Abrollkräften, was bei der Verarbeitung als hinderlich angesehen wird. Auch sind die erzielbaren Werte von Geräuschdämpfung und Abriebfestigkeit eines derartigen bekannten Bandes nur minimal.

Der Erfindung liegt die Aufgabe zugrunde, ein Klebeband, insbesondere ein von Hand einreißbares Klebeband, der eingangs genannten Art zu schaffen, dass diese Nachteile überwindet und somit bei Wahrung der Vorteile des Einsatzes eines Trägers, der als Wirkware in technologisch wenig aufwändiger Weise herstellbar ist, eine verbesserte Herstellbarkeit sowie auch verbesserte Gebrauchseigenschaften, insbesondere eine verbesserte Formstabilität bei der Verarbeitung, aufweist.

Erfindungsgemäß wird dies dadurch erreicht, dass der Träger in Querrichtung parallel zueinander verlaufende Schussfäden umfasst, welche in den Maschen des Gewirks gehalten sind.

Das erfindungsgemäße Klebeband ist im Vergleich zu Gewebebändern mit sehr viel geringerem Aufwand herstellbar, da es einen aus einem Gewirk bestehenden Träger aufweist, und daher verschiedene bei der Herstellung von Geweben erforderliche Verarbeitungsschritte, wie ein Auswaschen von Spinnöl, eine Thermofixierung sowie ein Kalandrieren zur Gewebeverdichtung bei seiner Herstellung entfallen können.

Das Gewirk des erfindungsgemäß eingesetzten Trägers kann dabei mit Vorteil viele an sich bei Gewirken bekannte Charakteristika aufweisen, wobei sich deren Vorteile im Zusammenwirken mit den in den Träger in Querrichtung eingezogenen Schussfäden in synergistischer Weise verbessern. So ist das erfindungsgemäße Klebeband sowohl manuell, als auch maschinell verarbeitbar, wobei seine Montagezeiten im Vergleich zu den eingangs genannten bekannten, nicht handeinreißbaren Bändern verkürzt sind. Das Abreißen des Bandes erfolgt dabei quer zu dessen Laufrichtung, wobei sich im Vergleich mit dem bekannten, ebenfalls vorstehend erwähnten, handeinreißbaren Klebeband eine sauberere und gleichmäßigere gerade Reißkante entlang der Schussfäden ergibt. Ausgefranste und faserige Reißkanten sowie ein Verjüngen des Materials beim Reißen sind dabei nahezu ausgeschlossen, da die Maschen durch die in ihnen gehaltenen Schussfäden in ihrer Lage stabilisiert werden.

In bevorzugter Ausführung können zu diesem Zweck die Schussfäden in jede Maschenreihe des Gewirkes eingebettet sein. Es ist vorzugsweise auch möglich, dass jeweils eine Masche des Gewirks von insbesondere zwei oder auch mehr Schussfäden durchzogen ist. Die Maschen ersetzen dabei gewissermaßen die Schussfadenbindung durch Kettfäden, wie sie in einem Gewebe vorliegt. Im Allgemeinen werden dabei im Rahmen der Erfindung Schussfadendichten im Bereich von 5 bis 100 Fäden pro cm, insbesondere im Bereich von 10 Fäden bis 20 Fäden pro cm, als optimal angesehen. Je nach Einsatz der Schussfäden können entweder Materialien mit hohem Abriebschutz oder Materialien mit guter Geräuschdämpfung kreiert werden.

Darüber hinaus stellt das erfindungsgemäß aus einem Gewirk mit parallelem Schusseintrag gebildete Trägermaterial, welches bevorzugt ein Kettengewirk ist, einen hervorragend leichten, aber trotzdem dichten Beschichtungsgrund für die Klebebeschichtung dar. Ein Durchschlagen der Klebebeschichtung auf die andere Trägerseite kann dabei - auch bei Einsatz eines Direktbeschichtungsverfahrens und ohne das Vorhandensein einer Grundierungsschicht - völlig unterbunden werden.

Hinsichtlich der Geräuschdämpfung und der Abriebfestigkeit können auch bei gleichzeitig hoher Luftdurchlässigkeit mit einem erfindungsgemäßen Klebeband sehr viel höhere - bekanntermaßen für Vliesträger charakteristische - Werte erzielt werden, als mit einem herkömmlichen Klebeband mit Gewebeträger, wobei diese Werte durch die Wahl entsprechender Materialien, Feinheiten und Garnarten für die Schussfäden in weitem Rahmen variierbar sind.

So können entsprechend dem zu erwartenden Anforderungsprofil des erfindungsgemäßen Klebebandes, insbesondere als Schussfäden, z. B. Mono- oder Multi-Filamentgarne, sowie auch Stapelfasergarne - diese insbesondere zur Erzielung einer hohen Geräuschdämpfung - eingesetzt werden. Durch den Einsatz eines Filamentgarns als Schussgarn können gezielt bestimmte Abriebfestigkeiten des Gewirks erzielt werden. Das Gewirk bekommt somit einen gewebeähnlichen Charakter. Durch ein Stapelfaserschussgarn erhält das Gewirk einen vliesähnlichen Charakter mit geräuschdämpfenden Eigenschaften.

Den Schussfäden kann mit Vorteil durch eine Texturierung ein höheres Volumen und durch ein Intermingeln eine höhere Stabilität verliehen werden. Das Intermingeln - auch Interlacing genannt - ist eine Zusatzausrüstung der Fäden, bei der die Fäden durch eine Verwirbelung mit Luft punktuell verflochten werden. Dabei wird der Zusammenhalt der einzelnen Filamente nicht durch ein Verdrehen, sondern durch eine Verschlingung der Filamente erreicht. Das Intermingeln kann mit glatten Fäden durchgeführt werden, es ist aber auch möglich, ein Intermingeln im direkten Anschluss an ein Texturieren der Fäden durchzuführen.

Hierbei ist hervorzuheben, dass mit dem erfindungsgemäßen Klebeband vorteilhafterweise Flächengewichte unter 60 g/m² erreicht werden können, was mit Näh- oder Nadelvliesen nicht möglich ist. Die Flächenstruktur ist dabei sehr viel gleichmäßiger als bei den genannten Vliesen und frei von störenden Dünnstellen, wie diese insbesondere bei Nähvliesen zu beobachten sind. Die Banddicke des erfindungsgemäßen Klebebandes kann dabei insbesondere im Bereich von 0,05 mm bis 2,5 mm liegen.

Trotz Handeinreißbarkeit in Querrichtung kann mit dem erfindungsgemäßen Klebeband in Längsrichtung eine Reißfestigkeit von mindestens 15 N/cm, vorzugsweise im Bereich von 15 N/cm bis 120 N/cm, besonders bevorzugt im Bereich von 20 N/cm bis 55 N/cm, erzielt werden. Die Reißdehnung in Längsrichtung ist dabei nicht größer als 60 %, und liegt vorzugsweise im Bereich von 10 % bis 50 %, besonders bevorzugt im Bereich von 15 % bis 25 %. Wenn das erfindungsgemäße Klebeband eine Reißdehnung von weniger als 55 % aufweist, tritt unter Zugkraft keine Verjüngung auf.

Die eingesetzten Gewirke, insbesondere Kettengewirke, sollten dabei vorzugweise kein elastisches Verhalten aufweisen, wobei unter Elastizität die Fähigkeit eines Materials verstanden wird, eine durch Einwirkung einer Kraft (Biegung, Druck, Zug etc.) verursachte Formveränderung beim Nachlassen der Krafteinwirkung durch Rückverformung wieder rückgängig zu machen. Konkret bedeutet dies insbesondere für die Erfindung, dass ein Klebeband, wenn es vor Erreichen der Reißdehnung wieder entlastet wird, sich um weniger als 50 %, vorzugsweise um weniger als 25 %, besonders bevorzugt um weniger als 10 % der durch die Belastung erreichten Dehnung zurückverformt. Es sollten daher im Rahmen der Erfindung vorzugsweise keine aus einem elastomeren bzw. gummielastischem Material bestehenden Garne oder Fäden eingesetzt werden.

Das erfindungsgemäße Klebeband kann so - insbesondere hinsichtlich seiner Eigenschaften - als ein Hybridband angesehen werden, welches die im Hinblick auf seinen Einsatz positiven Charakteristika von Gewebebändern und Vliesbändern in synergistischer Weise in sich vereinigt, das aber gleichzeitig die entsprechenden Eigenschaften von bekannten Klebebändern mit einem gewirkten Träger bei Weitem übertrifft.

Die Fertigung von textilen Flächengebilden, die aus einem gewirkten Träger bestehen, dessen Maschen von parallel zueinander verlaufenden Schussfäden durchzogen sind, ist dabei ein an sich in der Textiltechnik seit langem gut eingeführtes Verfahren, dessen technologische Weiterentwicklung bis in die letzte Zeit hinein jedoch nicht abgeschlossen ist. Solchermaßen hergestellte Textilien werden insbesondere als Möbelstoffe, wie für Sitzbezüge, eingesetzt, wobei vorzugsweise elastische Schussfäden verwendet werden. Hierzu wird exemplarisch hinsichtlich der Anfänge der Entwicklung von Wirkmaschinen, die zur Herstellung erfindungsgemäß einsetzbarer Träger geeignet sind, auf die USA-Patentschrift US 1 661 055 (Springthorpe) und hinsichtlich neuerer technischer Lösungen auf die deutschen Patente DE 198 54 153 C1 (Fa. Karl Mayer Textilmaschinenfabrik GmbH) und DE 10 2009 022 163 B4 (Fa. Liba Maschinenfabrik GmbH) verwiesen, wobei die Letzteren eine hohe mögliche Effizienz des Herstellungsverfahrens und damit eine kostengünstige Herstellungsweise eines erfindungsgemäßen Trägers belegen. Durch die Erfindung werden derartige textile Stoffe einer neuartigen Verwendung zugeführt.

Die technische Entwicklung der Wirkwaren lief in jüngerer Zeit insbesondere in Richtung der Herstellung von Gewirken mit einer immer höheren Maschendichte, als deren Maß die Angabe der Feinheit dient. Hierbei wird insbesondere die "Englische Feinheit" benutzt, welche in einem bei Wirk- und Strickmaschinen angewandten Nummerierungssystem die Zahl der auf einen englischen Zoll (25,4 mm) entfallenden Wirk- beziehungsweise Stricknadeln und somit die Gewirk- oder Gestrickdichte angibt, wobei diese Feinheitsangabe in der DIN ISO 8188:2009-02 "Textilmaschinen und Zubehör - Teilung von maschenbildenden Maschinen" genormt ist. Mit modernen hochpräzisen Wirkmaschinen sind heute Feinheiten bis E 60 und mehr möglich, wobei die entsprechenden Stoffe einen hochfeinen, seidenartigen Charakter aufweisen. Im Rahmen der Erfindung sind jedoch derartig hohe Feinheiten nicht erforderlich bzw. auch nicht erwünscht, da das Gewirk ja zusätzliche Fäden enthält, die durch die Maschen hindurch gehen. Erfindungsgemäß werden daher Feinheiten ab E9, insbesondere E18, E22, E24, E28, E32 bis zu E 44, als optimal angesehen. Das Gewirk des Trägers kann mit Vorteil eine Maschenreihenanzahl im Bereich von 2 pro cm bis 20 pro cm, vorzugsweise im Bereich von etwa 4 pro cm bis 18 pro cm und eine Stäbchenanzahl von ebenfalls im Bereich von 2 pro cm bis 20 pro cm, vorzugsweise im Bereich von etwa 3 pro cm bis 15 pro cm, aufweisen, wobei Stäbchen- und Maschenreihenzahlen nach DIN EN 14971 bestimmt werden.

Zur Herstellung eines erfindungsgemäß einsetzbaren Trägermaterials mit diesen Feinheiten erscheint dabei beispielsweise ein System von Barren und Wirkelementen geeignet, welches mindestens eine Einzelnadelbarre und eine Schieberbarre, eine Stechplatinenbarre, eine Abschlagplatinenbarre mit Abschlagblech, ein oder zwei Grundlegebarren, eine Stehfadenbarre, die als Lochnadel oder Platine ausgebildet ist, und eine Schusseinlegeplatinenbarre umfasst. Alternativ kann mit Vorteil auch ein System eingesetzt werden, welches aus mindestens einer Einzelnadelbarre und Schieberbarre, einer Einschließ-Abschlagplatinenbarre, ein, zwei oder drei Grundlegebarren und der Schusseinlegeplatinenbarre besteht. Stehfäden können also, müssen aber im Gewirk nicht ausgebildet sein.

Mit den genannten Systemen können insbesondere nach der sogenannten Malimo®-Technik Nähgewirke hergestellt werden, denen im Rahmen der Erfindung eine besondere Eignung als Trägermaterial zugemessen wird. Es können Gewirke mit offenen und/oder geschlossenen Maschen hergestellt werden. Im Sinne einer hohen mechanischen Stabilität kann das Gewirk dabei - im Gegensatz zu Kuliergewirken oder Gewirken mit gestrickten Maschen - aus einem Zwei- oder Mehrfadensystem gebildet werden. Eine Beschädigung eines Fadens des Gewirks des Trägers des erfindungsgemäßen Klebebandes führt daher im Gegensatz zu Einfadensystemen nicht sofort zu einer übermäßigen Destruktion des Gewirks, also zu sogenannten Laufmaschen.

Der Träger - sowohl das Garn für die Maschen des Gewirkes, als auch die Schussfäden - des erfindungsgemäßen Klebebandes kann aus Polyesterfasergarn, vorzugsweise aus Polyethylenterephthalat (PET), anderen Synthesefasergarnen, wie aus Polyamid (PA), Polyacrylat (PAK), Polyacrylnitril (PAN), Polyethylen (PE) oder Polypropylen (PP) oder aus einem Mischfasergarn synthetischer Fasern, vorzugsweise PET/PA, bestehen. Darüber hinaus sind, insbesondere für die Schussfäden, Baumwolle und Viskose als Garnmaterialien einsetzbar. Mit diesen Materialien können vorteilhafterweise Temperaturstabilitäten des erfindungsgemäßen Bandes im Bereich von 125 °C bis 150 °C erreicht werden, wobei die thermische Beständigkeit gemäß der gemeinsamen Prüfrichtlinie LV 312 der Firmen Audi, BMW, Daimler, Porsche und VW "Schutzsysteme für Leitungssätze in Kraftfahrzeugen" (LV 312-1, Ausgabe 1/2009) dabei den Klassen A, B oder C entspricht. Der Träger kann verrottungsfest und mit einer hohen Flexibilität und Schmiegsamkeit ausgebildet werden. Das spezifische Flächengewicht des Trägers kann dabei im Bereich von 20 bis 250 g/m², bevorzugt im Bereich von 40 bis 120 g/m², liegen, wobei eine Materialdicke des Trägers im Bereich von etwa 0,2 mm bis 1,5 mm als bevorzugt angesehen wird.

Bei dem erfindungsgemäß eingesetzten Gewirk sind grundsätzlich die drei Grundbindungsarten Rechts-Links, Links-Links und Rechts-Rechts sowie in Kombination damit die verschiedensten Legungen - also im Einzelnen insbesondere offene und geschlossene Franse, Trikot, Tuch, Satin, Samt, Atlas oder Köper, als Grundlegungsarten sowie daraus abgeleitete weitere Legungen - denkbar, wobei Franse und Satin bevorzugt sind. Es können dabei entsprechend der Grundbindungsart eine glatte und eine gerippte Trägerseite ausgebildet sein, um die gewünschte Klebstoffhaftung zu erzielen, jedoch ist dies erfindungsgemäß aufgrund des Vorhandenseins der Schussfäden nicht erforderlich. Auch ohne eine derartige Ausbildung tritt ein Umschlagen des Klebstoffes von einer Materialseite auf die andere nicht auf, wenn das Band auf sich selbst gewickelt wird. Durch die Legungsart kann dabei die Trägerelastizität beeinflusst - z. B. für Anwendungen im Automobilbau insbesondere minimiert - werden. So ist es beispielsweise bekannt, dass mit einer Trikotbindung in Stäbchenrichtung höchste Elastizitäten zu erreichen sind. Im Gegensatz dazu wird erfindungsgemäß bevorzugt z. B. eine Fransen- oder eine Satinbindung eingesetzt.

Bei der erfindungsgemäß bevorzugten Fransenbindung werden die Maschen beim Kettwirken immer in Kettrichtung ausgeführt. Die Franse verleiht so dem Kettengewirk insbesondere Längsstabilität. Die Kettfäden werden dabei zur Maschenbildung von der Legebarre jeweils um dieselbe Nadel gelegt, so dass nur Maschenstäbchen entstehen, die zueinander keine Verbindung haben und somit keine zusammenhängende Fläche bilden. Die Franse wird deshalb stets in Kombination mit anderen Legungen, wie insbesondere - wie erwähnt - Satin, gewirkt. Sie kann mit offenen oder geschlossenen Maschen als offene Franse bzw. geschlossene Franse gewirkt werden. Die erfindungsgemäß bevorzugte offene Franse hat die Besonderheit, dass sie ohne Unterlegungsversatz der Legebarre gebildet wird. Ein Vorteil besteht dabei darin, dass diese Legungsart durch ihre hohe Längsstabilität eine gegenüber anderen Legungsarten verringerte Quereinreißbarkeit bewirkt. Die geschlossene Franse wird bei den Produkten mit höherem Abriebschutz bevorzugt. Bei der Franse ist der zusätzliche Schussfaden immer quer zur Kettfaden- bzw. Maschen-Richtung, vorzugsweise dabei im 90°-Winkel, angeordnet. Bei der Verarbeitung eines erfindungsgemäßen Klebebandes wirkt der Schussfaden bzw. der Zwischenraum zwischen zwei Schussfäden jeweils als Rissansatzstelle, von der ausgehend dann auch die Maschen auf einfache Weise und unter - im Vergleich mit einem Gewirk ohne Schussfäden - verringertem Kraftaufwand gerissen werden können.

Die Feinheiten der Garnfäden des Gewirks des Trägers können im Bereich von etwa 20 dtex bis 167 dtex, insbesondere im Bereich von 30 dtex bis 100 dtex, besonders bevorzugt im Bereich von 40 dtex bis 80 dtex, liegen. Hierbei wird besonders der Einsatz von Fäden mit einer Feinheit von weniger als 84 dtex präferiert.

Die eingezogenen Schussfäden sollten stattdessen bevorzugt eine jeweils höhere Feinheit als die Fäden des Gewirks aufweisen. Die Feinheit der Schussfäden kann mit Vorteil im Bereich von 76 dtex bis 800 dtex, vorzugsweise im Bereich von 110 dtex bis 600 dtex, besonders bevorzugt im Bereich von 350 dtex bis 480 dtex, liegen. Es versteht sich dabei, dass für eine optimale Einbindung der Schussfäden in die Maschen den Feinheiten des Gewirks mit kleinerer Nummer, also z. B. E18, bzw. auch geringeren Maschenstäbchen- und Reihendichten des Gewirks größere Fadenfeinheiten im Schuss zuzuordnen sind und umgekehrt.

Als druckempfindliche Klebstoffe können Acrylatklebstoffe, insbesondere UV-vernetzbare Acrylatklebstoffe, Synthese- und auch Naturkautschukklebstoffe eingesetzt werden, wobei sich das verwendete Auftragsverfahren nach der Durchlässigkeit des Trägermaterials richtet. In jedem Fall wird dabei aber bevorzugt ein kontinuierlicher, uniformer Film auf den Träger aufgetragen. Mit dem erfindungsgemäßen Klebeband können dabei Klebkräfte erzielt werden, die den im Verwendungsfall auftretenden Anforderungen gut entsprechen, wie dies nachstehend im Detail noch quantifizierend ausgeführt wird. Auch der Einsatz eines druckempfindlichen Silikonkautschukklebers ist möglich.

Bei Düsenauftragungsverfahren lassen sich drei Grundvarianten unterscheiden: die Direktbeschichtung, die Kontaktbeschichtung ("Kiss Coat") und die indirekte Beschichtung, wobei letztere insbesondere drucklos im sogenannten Curtain-Coating-Verfahren erfolgen kann.

Als Auftragsverfahren kann zunächst eine Direktbeschichtung des Trägers eingesetzt werden. Bekannte Direktbeschichtungsverfahren sind der Walzen- und der Düsenauftrag, wobei insbesondere die zweite Form als besonders geeignet erscheint. Beim Walzenauftrag wird der fließfähige Klebstoff über ein beheiztes Walzensystem dosiert und in der gewünschten Schichtdicke aufgetragen. Bei einem Düsenauftrag wird der Klebstoff mittels einer Pumpe, insbesondere einer Zahnradpumpe, durch eine Breitschlitzdüse (sogenannte GID-Düse) gedrückt, die dabei auf dem Trägermaterial aufliegen kann. Durch die Düse wird der Klebstoff gleichmäßig flächenförmig verteilt und direkt auf das Trägermaterial aufgebracht.

Direktbeschichtungen lassen sich immer dann vorteilhaft durchführen, wenn der Träger ausreichend dicht ist, d. h. wenn ein Wandern der Klebstoffe durch den Träger während der Beschichtung ausgeschlossen werden kann. Außerdem muss der Träger über eine ausreichende thermische Stabilität verfügen. Alle diese Bedingungen können durch ein erfindungsgemäßes Klebeband erfüllt werden.

Als Alternative zum direkten Auftragsverfahren kann mit Vorteil auch ein Kontaktverfahren ("Kiss Coat") mit Hilfe z. B. einer Düse der Firma Nordson, die unter dem Namen Truecoatdüse bekannt ist, verwendet werden. Durch Anwendung dieses Verfahrens wird erreicht, dass der Kleber vergleichsweise in engeren Kontakt mit dem Substrat gelangt, wobei eine zusätzliche Verfestigung der Gewirk- und der Schussfäden stattfindet.

Der Klebstoff kann - wie vorstehend erwähnt - auch in einem drucklosen Beschichtungsverfahren, wie dem sogenannten "Curtain-Coating-Verfahren", aufgebracht werden. Gemäß diesem Verfahren fällt ein geschlossener Klebstofffilm auf das Substrat. Dadurch wird eine gleichmäßige Dicke und damit Grammatur der Klebstoffschicht erreicht.

Schließlich können auch indirekte Beschichtungsverfahren, wie z. B. die Transferbeschichtung mit Hilfe eines Zwischenträgers, zum Einsatz kommen. Dazu wird zuerst ein silikonisierter Interliner, z. B. silikonisiertes Papier oder silikonisierte Polymerfolie, wie Polyolefinfolie oder Polyesterfolie, beschichtet. Anschließend wird das Trägermaterial zukaschiert. Soll ein auf sich selbst gewickeltes Klebeband nach diesem Verfahren hergestellt werden, so muss bei der Konfektionierung der Rollen allerdings der Interliner, welcher als Prozesshilfe dient, wieder von dem Trägermaterial abgezogen und separat aufgewickelt werden.

Drucklose und Transferbeschichtungen werden bevorzugt bei temperaturempfindlichen und/oder für den Klebstoff durchlässigen Trägern eingesetzt. Eine Beschädigung des Trägers und die Verschmutzung der Beschichtungswalzen während des Beschichtungsprozesses werden so vermieden.

Die Klebebeschichtung kann mit Vorteil mit einer Grammatur im Bereich von 20 g/m² bis 300 g/m², vorzugsweise im Bereich von 40 g/m² bis 120 g/m², auf dem Träger aufgebracht sein.

Weitere vorteilhafte Ausführungen der Erfindung sind in den Unteransprüchen und der nachfolgenden speziellen Beschreibung enthalten. Anhand mehrerer Ausführungsbeispiele wird dabei die Erfindung näher erläutert.

Anhand der Zeichnung soll die Erfindung beispielhaft genauer erläutert werden. Dabei zeigen:
- Fig. 1: einen schematisierten Querschnitt durch ein erfindungsgemäßes Klebeband,
- Fig. 2: eine schematisierte Aufsicht auf eine erste Ausführung eines Trägers eines erfindungsgemäßen Klebebandes,
- Fig. 3: eine schematisierte Aufsicht auf eine zweite Ausführung eines Trägers eines erfindungsgemäßen Klebebandes,
- Fig. 4: eine Aufsicht auf eine dritte Ausführung eines Trägers eines erfindungsgemäßen Klebebandes,
- Fig. 5: eine vergrößerte Aufsicht auf die dritte Ausführung des Trägers eines erfindungsgemäßen Klebebandes in seinem Randbereich,
- Fig. 5a: eine ähnliche Ansicht des Trägers eines erfindungsgemäßen Klebebandes wie in Fig. 5, jedoch bei Beginn eines Quereinreißens,
- Fig. 6: eine tabellarische Übersicht (Tabelle 1) zu den Charakteristika eines Trägers eines erfindungsgemäßen Klebebandes in drei verschiedenen Konstruktionen,
- Fig. 7: eine tabellarische Übersicht (Tabelle 2) zu den Charakteristika von erfindungsgemäßen Klebebändern mit den Konstruktionen gemäß Fig. 6 im Vergleich mit denen zweier bekannter Klebebänder,
- Fig. 8: eine schematisierte Aufsicht auf eine vierte Ausführung eines Trägers eines erfindungsgemäßen Klebebandes.

Zu der anschließenden Beschreibung wird ausdrücklich betont, dass die Erfindung nicht auf die dargestellten Ausführungsbeispiele und dabei auch nicht auf alle oder mehrere Merkmale von beschriebenen Merkmalskombinationen beschränkt ist, vielmehr kann jedes einzelne Teilmerkmal jedes Ausführungsbeispiels, insbesondere, was die Zeilen in den beiden Tabellen betrifft, auch losgelöst von allen anderen im Zusammenhang damit beschriebenen Teilmerkmalen, z. B. anderen Tabellenzeilen, für sich und auch in Kombination mit beliebigen Merkmalen eines anderen Ausführungsbeispiels eine erfinderische Bedeutung haben.

In den Figuren der Zeichnung sind gleiche Teile stets auch mit den gleichen Bezugszeichen versehen, so dass sie in der Regel auch jeweils nur einmal beschrieben werden.

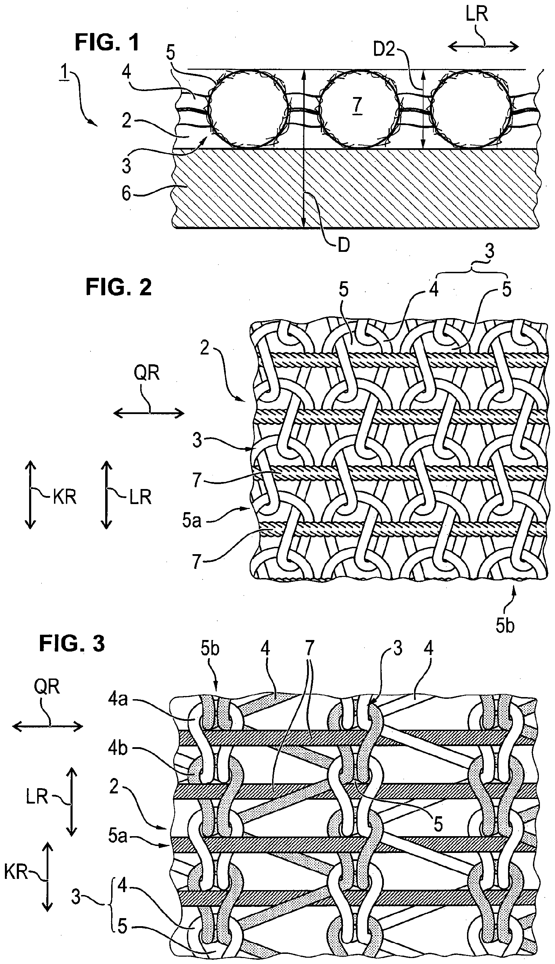

Fig. 1 zeigt zunächst ein auf sich selbst wickelbares, in Querrichtung von Hand einreißbares, textiles technisches Klebeband 1, welches eine Dicke D aufweist und einen bandförmigen Träger 2 umfasst. Der Träger 2 weist bevorzugt eine Dicke D2 im Bereich von 0,05 mm bis 1,0 mm auf und besteht aus einem Gewirk 3 mit aus Garn 4 gebildeten Maschen 5. Auf einer Seite ist der Träger 2 mit einer druckempfindlichen Klebebeschichtung 6 versehen, die mit einem spezifischen Flächengewicht im Bereich von 20 g/m² bis 350 g/m² unmittelbar auf den Träger 2 aufgebracht ist und aus einem natürlichen oder synthetischen, kautschuk- und/oder acrylat- und/oder silikonhaltigen, vorzugsweise UV-vernetzbaren, Haftklebstoff besteht.

Erfindungsgemäß ist vorgesehen, dass der Träger 2 in Querrichtung QR des erfindungsgemäßen Klebebandes 1 parallel zueinander verlaufende Schussfäden 7 umfasst, welche in den Maschen 5 des Gewirks 3 gehalten sind. Die Schussfäden 7 verlaufen insbesondere rechtwinklig zur Längsrichtung LR des Klebebandes 1.

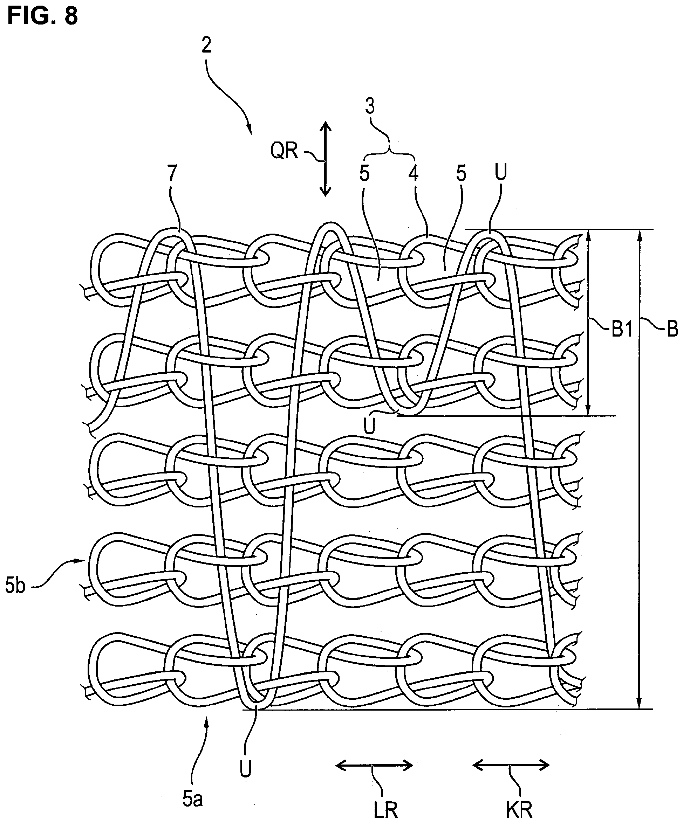

Die in Fig. 2 dargestellte erste Ausführung eines Trägers 2 eines erfindungsgemäßen Klebebandes 1 zeigt dabei eine sehr einfache mögliche Ausführung. Das Gewirk 3 liegt dabei in offener Fransenlegung vor, und jede Maschenreihe ist von einem Schussfaden 7 durchzogen. Die Schussfäden 7 verlaufen im Kettengewirk im rechten Winkel zur Kettrichtung KR bzw. zur Grundrichtung der Längserstreckung der Maschenstäbchen, welche in dieser Ausführung identisch mit der Längsrichtung LR des Klebebandes 1 ist. Letzteres ist auch bei den in Fig. 3 und 8 dargestellten Ausführungen des Trägers 2 der Fall.

Bei der in Fig. 3 dargestellten, zweiten Ausführung des Trägers 2 liegt das Gewirk 3 in Trikotlegung vor. Auch hier ist jede Maschenreihe von einem Schussfaden 7 durchzogen. Durch eine unterschiedliche Kennzeichnung (schwarz und weiß) der Fäden 4 des Gewirks 3 wird dabei verdeutlicht, dass es sich um ein System mit zwei Fäden (4a - erster Garnfaden, 4b - zweiter Garnfaden) in einem Kettengewirk handelt. Die Schussfäden 7 sind schraffiert dargestellt.

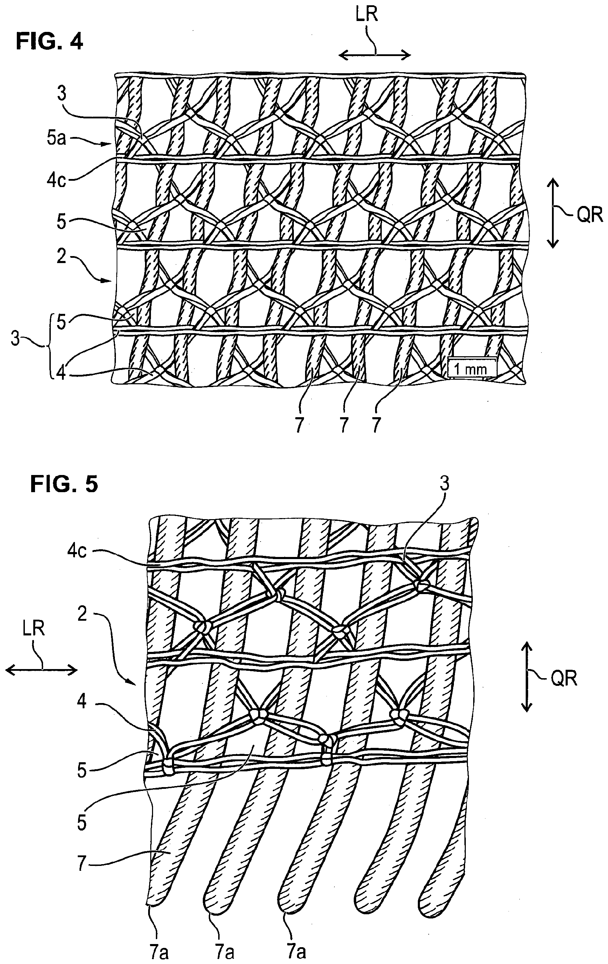

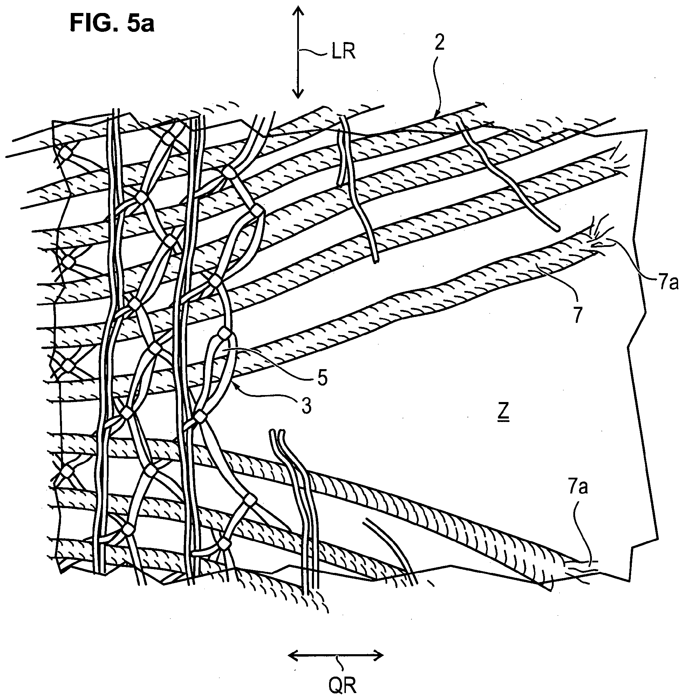

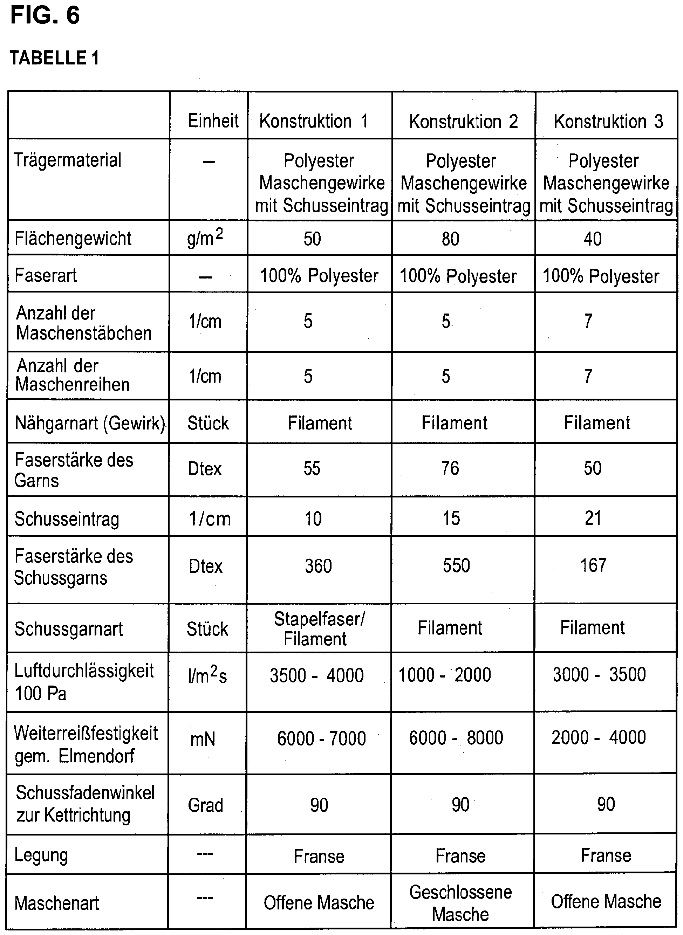

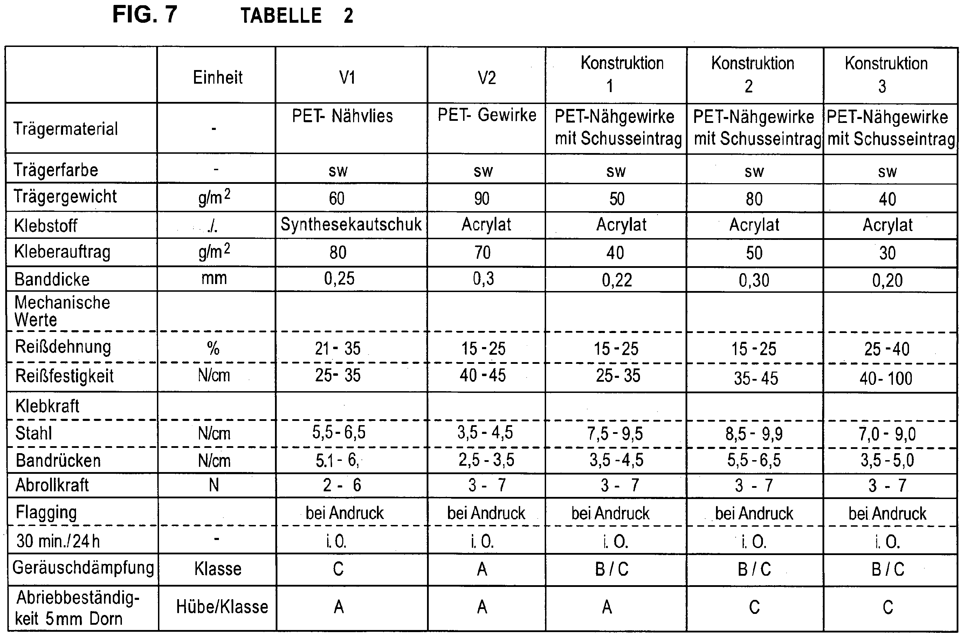

Fig. 4 bis 7 beziehen sich auf ein in drei unterschiedlichen Konstruktionen vorliegendes erfindungsgemäßes Klebeband 1, bei dem das Gewirk 3 des Trägers 2 ebenfalls ein Kettengewirk und dabei gleichzeitig auch ein Nähgewirk - also ein sogenanntes Kettennähgewirk - ist. Die Grundlegungsart ist Franse. Fig. 4, 5 und 5a sind dabei - was die Parameter des Gewirks 3 und die der Schussfäden 7 betrifft - insbesondere der in den Tabellen 1 und 2 von Fig. 6 und 7 aufgeführten "Konstruktion 1" zuzuordnen.

Den in Fig. 4, 5 und 5a dargestellten Aufsichten auf die Ausführung des Trägers 2 des erfindungsgemäßen Klebebandes 1 ist zu entnehmen, dass das Gewirk 3 des Trägers 2 bevorzugt ein Kettennähgewirk sein kann. Eine Besonderheit des dargestellten Gewirks 3 besteht dabei darin, dass nicht nur die Schussfäden 7 in jede Maschenreihe 5a des Gewirks 3 eingebettet sind, sondern dass auch jeweils eine Masche 5 des Gewirks 3 jeweils von zwei Schussfäden 7 durchzogen ist. Dabei liegen aber zwei nebeneinander liegende Schussfäden 7, die sich in einer Maschenreihe 5a gemeinsam in einer Masche 5 befinden, in der nächstfolgenden Maschenreihe 5a nicht in einer Masche 5, sondern zusammen in einer Masche 5 mit einem jeweils anderseitig neben dem jeweiligen Schussfaden 7 liegenden Schussfaden 7. Dadurch wird eine sehr stabile gewebeartige Struktur erreicht. Diesem Zweck dienen auch in Bandlängsrichtung LR, also längs der Maschenreihen 5a, verlaufende, optional vorhandene Wirkfäden 4a, durch die die Maschen 5 zu geschlossenen Maschen 5 werden können. Die Stäbchenreihen der Maschen 5 sind mit dem Bezugszeichen 5b bezeichnet.

Unter geschlossenen Maschen 5 versteht man Maschen 5, deren Füße sich überkreuzen. Kettengewirke werden mit geschlossenen und offenen Maschen 5 produziert, Gestricke und Kuliergewirke nur mit offenen Maschen. Geschlossene Maschen entstehen in Kettengewirken, wenn die Legebarre nach der Überlegung ausschwingt und eine Unterlegung in die entgegengesetzte Richtung ausführt.

Wie Fig. 5 und 5a zeigen, sind die Schussfäden 7 im Randbereich des Trägers 2 abgeschnitten. Die derart gebildeten freien Enden 7a fördern die Quereinreißbarkeit des erfindungsgemäßen Klebebandes 1, wie dies insbesondere durch Fig. 5a veranschaulicht wird. Die Schussfäden 7 bzw. der Zwischenraum Z zwischen zwei nebeneinander liegenden Schussfäden 7 bilden jeweils eine Stelle, an der der Riss beginnen kann und von der ausgehend dann auch die Maschen 5 auf einfache Weise und unter - im Vergleich mit einem Gewirk 3 ohne Schussfäden 7 - verringertem Kraftaufwand gerissen werden können, weil die auseinandergespreizten Enden 7a der nebeneinander liegenden Schussfäden 7 dabei eine Kerbwirkung auf den Träger 2, insbesondere auf dessen Maschen 5 ausüben. Dies verhält sich während des gesamten Reißvorgangs so, bei dem in Querrichtung QR eine Masche 5 nach der anderen sukzessiv zerrissen wird.

Die Konstruktionen des Trägers 2 des erfindungsgemäßen Klebebandes 1 wiesen die in der Tabelle 1 aufgeführten Eigenschaften auf. Wie aus einem Vergleich der entsprechenden Spalten der Tabelle hervorgeht, unterschieden sich die Konstruktionen insbesondere durch die Faserstärken des Garns 4 des Gewirks 3 (in Tabelle 1 mit "Nähgarn" bezeichnet), die Schussfadendichte ("Schusseintrag"), die Faserart und -stärke der Schussfäden 7 sowie durch die Luftdurchlässigkeit und die Quereinreißbarkeit ("Weiterreißfestigkeit nach Elmendorf") der Träger 2. Bei der Konstruktion 1 und 3 kamen offene Maschen 5, bei der Konstruktion 2 geschlossene Maschen 5 zum Einsatz.

Die beiden Träger-Konstruktionen wurden in üblicher Weise zu erfindungsgemäßen Klebebändern 1 konfektioniert, indem sie mit einer Acrylat-Klebebeschichtung bedeckt wurden. Die auf diese Weise hergestellten erfindungsgemäßen Klebebänder 1 wiesen die in der Tabelle 2 aufgeführten Eigenschaften auf. Diese Eigenschaften sind denen eines bekannten, nicht erfindungsgemäßen Klebebandes mit einem Nähgewirkträger (PET-Nähvlies), das unter dem Namen Coroplast® 8551 bekannt und mit V1 bezeichnet ist, gegenübergestellt. Als weiteres Vergleichsklebeband V2 ist in Tabelle 2 ein unter dem Namen Coroplast® 847 X bekanntes Klebeband mit einem aus einem PET-Gewirk bestehenden Träger aufgeführt.

Die in den beiden Tabellen als Basisdaten der Träger und der Klebebänder angegebenen Parameter wurden nach folgenden Normen bestimmt: EN ISO 2286-1 für das spezifische Gewicht des Trägers 1, Maschenstäbchen- und Maschenreihendichte nach DIN EN 14971, Faserstärke (Feinheit) nach DIN 53830-3, Fadendichte nach DIN EN 1049-2, DIN EN 1942 für die Dicke D der Träger, DIN EN 14410 für die mechanischen Werte, DIN EN 1939 für die Klebkraft, DIN EN 1944 für die Abrollkraft der Klebebänder, DIN 53 887 für die Luftdurchlässigkeit des Trägers, DIN EN 21974 für die Weiterreißfestigkeit. Das Flaggingverhalten, die Geräuschdämpfung und die Abriebbeständigkeit wurden nach LV 312 bestimmt.

In Tabelle 1 sind insbesondere die hohen Luftdurchlässigkeiten der Träger 2 hervorzuheben, die bei einem Prüfdruck von 100 Pa im Gesamtbereich von 50 l/m²s bis 6000 l/m²s bzw. im Vorzugsbereich von 100 l/m²s bis 4000 l/m²s lagen. Die Weiterreißfestigkeit nach Elmendorf lag dabei im Bereich von 6 N bis 8 N, wobei diese Werte charakteristisch für die Handeinreißbarkeit sind. Im Allgemeinen kann ein erfindungsgemäßes Klebeband 1 bei einer Prüfung nach Elmendorf eine Weiterreißfestigkeit im Bereich von 2000 mN bis 30 000 mN aufweisen, wobei diese insbesondere zur Erzielung einer Handeinreißbarkeit im Bereich von 2000 mN bis 10000 mN, vorzugsweise im Bereich von 3000 mN bis 8000 mN, liegen kann. Die Konstruktion 3 zeigt eine untere Bereichsgrenze von nur 2000 mN für diesen Parameter.

In Tabelle 2 bedeuten dabei: "s/w" - Träger teilweise schwarz, teilweise weiß, "i. O." - in Ordnung, d. h. kein Flagging nach 30 Minuten bzw. 24 Stunden. Die in Tabelle 2 angegebenen Parameter dokumentieren dabei die vorteilhaft erfindungsgemäß erreichbaren Eigenschaften, insbesondere die vergleichsweise hohen Werte von Abrieb (Klasse C am 5 mm Dorn bei Konstruktion 2) und Geräuschdämpfung (Klasse B oder C bei beiden Konstruktionen) bei geringer Reißfestigkeit und Banddicke D sowie bei hoher Klebkraft. Die Klebkraft eines erfindungsgemäßen Klebebandes 1 kann insbesondere im Bereich von 2,0 N/cm bis 15 N/cm, bevorzugt im Bereich von 4,0 N/cm bis 10 N/cm auf Stahl und im Bereich von 2,0 N/cm bis 15,0 N/cm, bevorzugt im Bereich von 3,0 N/cm bis 8,0 N/cm, auf dem Bandrücken liegen.

Die Erfindung beschränkt sich nicht auf die beschriebenen Ausführungsbeispiele, sondern wird durch die Ansprüche 1-27 definiert. So kann es sich - wie bereits erwähnt - bei dem Trägermaterial 1 auch um ein Gewirk 3 mit anderer Legungsart als den dargestellten handeln. Dabei ist es nicht zwingend notwendig, dass die Schussfäden 7 im Gewirk 3 genau im rechten Winkel zur Kettrichtung KR bzw. zur Grundrichtung der Längserstreckung der Maschenstäbchen verlaufen und dass die Längsrichtung LR des Klebebandes 1 identisch mit der Kettrichtung KR ist. So weisen beispielsweise Tuch-, Satin- und Samtbindungen eine Grundrichtung KR der Längserstreckung ihrer Maschenstäbchen auf, die gegenüber der in Fig. 2 gezeigten Kettrichtung KR der Fransenbindung und damit zur Längsrichtung LR des Klebebandes 1 in einem spitzen Winkel nach rechts oder links geneigt sein kann. Dann verlaufen die Schussfäden 7 im Gewirk 3 nicht genau im rechten Winkel zu dieser Kettrichtung KR, jedoch immer noch quer dazu, und sie sollten in jedem Fall immer quer, und bevorzugt - wie in Fig. 2 dargestellt-rechtwinklig zur Längsrichtung LR des Klebebandes 1 verlaufen, weil ihre Orientierung wesentlich den Rissverlauf beim Quereinreißen bestimmt. Der entstehende Riss verläuft dann ebenfalls rechtwinklig zur Längsrichtung LR des Klebebandes 1.

Auch kann der Fachmann die Erfindung durch zusätzliche vorteilhafte Maßnahmen ergänzen, ohne dass der Rahmen der Erfindung verlassen wird. So kann das erfindungsgemäße Klebeband 1 beispielsweise optional mit einer flammwidrig wirkenden Ausrüstung versehen sein. Dass das erfindungsgemäße Klebeband ein auf sich selbst wickelbares Klebeband ist, besagt, dass es ohne die Notwendigkeit der Verwendung eines silikonisierten Interliners auf sich selbst - also auf seinen eigenen Bandrücken - gewickelt und auch wieder davon abgewickelt werden kann, was durch die entsprechenden bevorzugten Klebkräfte im Bereich von 3,0 N/cm bis 8,0 N/cm zum Ausdruck kommt. Die Verwendung eines Interliners liegt jedoch nicht außerhalb des Rahmens der Erfindung, wenn beispielsweise diese Klebkräfte für bestimmte Anwendungsfälle bedarfsweise höher gewählt werden sollten.

Des Weiteren wird mit Hinweis auf Fig. 8, die eine vierte Ausführung eines Trägers 2 zeigt, auch noch erwähnt, dass beim Kettenwirken der Schussfaden 7 zwischen Nadel- und Platinenmaschen 5 des Warengrunds eingebunden wird. Hierbei kann der Schussfaden 7 entweder - wie in Fig. 2 bis 5a und teilweise auch in Fig. 8 dargestellt - über die gesamte Breite B des Trägers 2 des Klebebandes 1 verlaufen und heißt dann Vollschuss, und/oder der Schussfaden 7 verläuft - wie speziell in Fig. 8 gezeigt - nur über einen Teil B1 dieser Breite B, und heißt dann Teilschuss.

Der Schussfaden 7 kann als Fadenstrecke horizontal, diagonal oder - nur im Fall von Teilschüssen - vertikal im Kettengewirk 3 verlaufen. Zur Herstellung von Teilschüssen verwendet man gewöhnliche Legebarren, die ihre Kettfäden ausschließlich in Unterlegungsposition in den Träger 2 einlegen. Bei verschieden langen Unterlegungen und Richtungswechsel entstehen dabei innerhalb der Breite B des Trägers 2 Umkehrstellen U der Teilschüsse.

Vollschüsse können als Parallelschuss (parallel zu den Maschenreihen 5a), als Diagonalschuss (diagonal zu den Maschenreihen 5a) oder als Kreuzschuss (diagonal zu den Maschenreihen 5a mit Richtungswechsel) in ein Kettengewirk 3 eingelegt werden. Sie werden mit Hilfe von sogenannten Magazin-Schusseinrichtungen hergestellt. Vollschüsse werden sowohl maschenreihengerecht als auch nicht-maschenreihengerecht erzeugt. Durch Vollschüsse lassen sich mono-, bi- und multiaxiale Gewirke 3 herstellen. Vollschüsse können dem Träger 2 je nach verwendetem Material des Garns 4 entlang ihrer Achsen Dimensionsstabilität oder Elastizität verleihen.

In einem erfindungsgemäßen Klebeband 1 können die Schussfäden 7 in dem Gewirk 3 des Trägers 2 sich zumindest bereichsweise als Teilschuss über einen Teil B1 der Breite B des Trägers 2 und/oder zumindest bereichsweise bevorzugt als Vollschuss über die gesamte Breite B des Trägers 2 erstrecken, wobei die Schussfäden 7 parallel oder diagonal zu den Maschenreihen 5a oder als Kreuzschuss diagonal zu den Maschenreihen 5a mit Richtungswechsel verlaufen. Zwar sind freie Enden 7a der Schussfäden 7 aufgrund ihrer höheren Kerbwirkung bevorzugt, jedoch kann auf ein Aufschneiden der Umkehrstellen U der Schussfäden 7 verzichtet werden, insbesondere wenn deren Feinheit in einem Bereich unter 200 dtex liegt.

Die Erfindung wird durch die Ansprüche 1-27 definiert.

### Bezugszeichen

- 1: Klebeband
- 2: Träger
- 3: Gewirk von 2
- 4: Garn von 3
- 4a: erster Garnfaden von 3 (Fig. 3)
- 4b: zweiter Garnfaden von 3 (Fig. 3)
- 4c: Wirkfaden in Bandlängsrichtung LG (Fig. 4)
- 5: Masche von 3
- 5a: Maschenreihe
- 5b: Stäbchenreihe
- 6: Klebebeschichtung
- 7: Schussfaden von 2
- 7a: freies Ende von 7

- B: Breite von 2 (Fig. 8, Vollschuss)
- B1: Teilbreite von 2 (Fig. 8, Teilschuss)
- D: Dicke von 1
- D2: Dicke von 2
- LR: Längsrichtung von 1
- QR: Querrichtung von 1
- U: Umkehrstelle von 7 im Teilschuss (Fig. 8)
- Z: Zwischenraum zwischen zwei Schussfäden 7

## Patentansprüche

1. Auf sich selbst wickelbares, quereinreißbares, textiles technisches Klebeband (1), mit einem bandförmigen Träger (2), der eine Dicke (D2) im Bereich von 0,05 mm bis 1,8 mm aufweist, aus einem Gewirk (3) mit aus Garn (4) gebildeten Maschen (5) besteht, und der auf einer Seite mit einer druckempfindlichen Klebebeschichtung (6) versehen ist, welche mit einem spezifischen Flächengewicht im Bereich von 20 g/m² bis 300 g/m² unmittelbar auf den Träger (2) aufgebracht ist,
**dadurch gekennzeichnet, dass** der Träger (2) in Querrichtung (QR) parallel zueinander verlaufende Schussfäden (7) umfasst, welche in den Maschen (5) des Gewirks (3) gehalten sind.

2. Klebeband (1) nach Anspruch 1,
**dadurch gekennzeichnet, dass** das Gewirk (3) des Trägers (2) ein Kettengewirk ist, wobei die Schussfäden (7) im Kettengewirk vorzugsweise im rechten Winkel zur Kettrichtung verlaufen.

3. Klebeband (1) nach Anspruch 1 oder 2,
**dadurch gekennzeichnet, dass** das Gewirk (3) des Trägers (2) ein Nähgewirk ist.

4. Klebeband (1) nach einem der Ansprüche 1 bis 3,
**dadurch gekennzeichnet, dass** das Gewirk (3) des Trägers (2) eine Feinheit im Bereich von E9, insbesondere E18, bis E 44 nach DIN ISO 8188:2009-02 aufweist.

5. Klebeband (1) nach einem der Ansprüche 1 bis 4,
**dadurch gekennzeichnet, dass** das spezifische Flächengewicht des Trägers (2) im Bereich 20 bis 250 g/m², bevorzugt im Bereich von 40 bis 120 g/m², liegt, wobei eine Dicke (D2) des Trägers (2) vorzugsweise im Bereich von 0,2 mm bis 1,5 mm, bevorzugt im Bereich von 0,5 mm bis 1,0 mm liegt.

6. Klebeband (1) nach einem der Ansprüche 1 bis 5
**dadurch gekennzeichnet, dass** die Reißfestigkeit in Längsrichtung mindestens 15 N/cm beträgt und vorzugsweise im Bereich von 15 N/cm bis 120 N/cm, besonders bevorzugt im Bereich von 20 N/cm bis 55 N/cm, liegt, wobei die Reißdehnung in Längsrichtung insbesondere nicht größer als 60 % ist und vorzugsweise im Bereich von 10 % bis 50 %, besonders bevorzugt im Bereich von 15 % bis 25 %, liegt.

7. Klebeband (1) nach einem der Ansprüche 1 bis 6,
**dadurch gekennzeichnet, dass**, wenn bei Belastung vor Erreichen der Reißdehnung eine Entlastung erfolgt, eine Rückverformung von weniger als 50 %, vorzugsweise von weniger als 25 %, besonders bevorzugt von weniger als 10 % der durch die Belastung erreichten Dehnung eintritt.

8. Klebeband (1) nach einem der Ansprüche 1 bis 7,
**dadurch gekennzeichnet, dass** die Klebebeschichtung (6) aus einem natürlichen oder synthetischen, kautschuk- und/oder silikon- und/oder acrylathaltigen, vorzugsweise UV-vernetzbaren, Haftklebstoff besteht und insbesondere mit einer Grammatur im Bereich von 20 g/m² bis 300 g/m², vorzugsweise im Bereich von 40 g/m² bis 120 g/m², auf dem Träger (2) aufgebracht ist.

9. Klebeband (1) nach einem der Ansprüche 1 bis 8,
**dadurch gekennzeichnet, dass** seine Dicke (D) im Bereich von etwa 0,05 mm bis 2,5 mm liegt.

10. Klebeband (1) nach einem der Ansprüche 1 bis 9,
**dadurch gekennzeichnet, dass** der Träger (2) eine Maschenreihenanzahl im Bereich von 2 pro cm bis 20 pro cm, vorzugsweise im Bereich von etwa 4 pro cm bis 18 pro cm, aufweist, wobei der Träger (2) insbesondere eine Stäbchenanzahl im Bereich von 2 pro cm bis 20 pro cm, vorzugsweise im Bereich von etwa 3 pro cm bis 15 pro cm, aufweist.

11. Klebeband (1) nach einem der Ansprüche 1 bis 10,
**dadurch gekennzeichnet, dass** das Garn (4) des Gewirks (3) des Trägers (2) und/oder die Schussfäden (7) des Trägers (2) aus Polyesterfasern, vorzugsweise aus Polyethylenterephtalat (PET), oder aus anderen, insbesondere synthetischen Fasern, wie aus Polyamid (PA), Polyethylen (PE), Polypropylen (PP), Polyacryl (PAK), Polyacrylnitril (PAN), Viskose oder Baumwolle bestehen, oder dass das Garn (4) ein Mischfasergarn synthetischer Fasern, wie vorzugsweise aus Polyethylenterephtalat (PET) und Polyamid (PA), ist.

12. Klebeband (1) nach einem der Ansprüche 1 bis 11,
**dadurch gekennzeichnet, dass** das Gewirk (3) aus einem Zwei- oder Mehrfadensystem (4a, 4b) gebildet ist.

13. Klebeband (1) nach einem der Ansprüche 1 bis 12,
**dadurch gekennzeichnet, dass** die Feinheit der Garnes (4) des Gewirks (3) im Bereich von etwa 20 dtex bis 167 dtex, insbesondere im Bereich von 30 bis 100 dtex, besonders bevorzugt in einem Bereich von weniger als 84 dtex, und dabei im Bereich von 40 bis 80 dtex, liegt.

14. Klebeband (1) nach einem der Ansprüche 1 bis 13,
**dadurch gekennzeichnet, dass** die Feinheit der Schussfäden (7) im Bereich von 50 dtex bis 1100 dtex, vorzugsweise im Bereich von 76 dtex bis 800 dtex, besonders bevorzugt im Bereich von 110 dtex bis 600 dtex, liegt, wobei die Dichte der Schussfäden (7) bevorzugt im Bereich von 5 bis 100 Fäden pro cm liegt.

15. Klebeband (1) nach einem der Ansprüche 1 bis 14,
**dadurch gekennzeichnet, dass** die Schussfäden (7) aus einem Glattgarn bestehen oder texturiert und/oder intermingelt sind, wobei die Schussfäden insbesondere (7) aus einem Stapelfaser- oder aus einem Filamentgarn, vorzugsweise aus einem Monofilamentgarn, gebildet sind.

16. Klebeband (1) nach einem der Ansprüche 1 bis 15,
**dadurch gekennzeichnet, dass** die Schussfäden (7) in jede Maschenreihe und/oder Stäbchenreihe des Gewirkes (3) eingebettet sind, wobei insbesondere eine Anzahl von Maschen (5), vorzugsweise jede Masche (5) des Gewirks (3) jeweils von insbesondere zwei oder auch von mehr Schussfäden (7) durchzogen ist.

17. Klebeband (1) nach einem der Ansprüche 1 bis 16,
**dadurch gekennzeichnet, dass** das Klebeband (1) bei einer Prüfung nach EN 1939 eine Klebkraft im Bereich von 2,0 N/cm bis 15 N/cm, bevorzugt im Bereich von 4,0 N/cm bis 10 N/cm auf Stahl und im Bereich von 2,0 N/cm bis 15,0 N/cm, bevorzugt im Bereich von 3,0 N/cm bis 8,0 N/cm, auf dem Bandrücken aufweist.

18. Klebeband (1) nach einem der Ansprüche 1 bis 17,
**dadurch gekennzeichnet, dass** der Träger (2) bei einer Prüfung nach DIN 53 887 bei einem Prüfdruck von 100 Pa eine Luftdurchlässigkeit im Bereich von 50 l/m²s bis 6000 l/m²s, vorzugsweise im Bereich von 100 l/m²s bis 4000 l/m²s, aufweist.

19. Klebeband (1) nach einem der Ansprüche 1 bis 18,
**dadurch gekennzeichnet, dass** das Klebeband (1) bei einer Prüfung nach LV 312 eine Geräuschdämpfung mindestens der Klasse B, vorzugsweise der Klasse C, aufweist.

20. Klebeband (1) nach einem der Ansprüche 1 bis 19,
**dadurch gekennzeichnet, dass** das Klebeband (1) bei einer Prüfung nach LV 312 eine Abriebfestigkeit mindestens der Klasse B, vorzugsweise der Klasse C oder D, aufweist.

21. Klebeband (1) nach einem der Ansprüche 1 bis 20,
**dadurch gekennzeichnet, dass** das Klebeband (1) bei einer Prüfung nach Elmendorf eine Weiterreißfestigkeit im Bereich von 2000 mN bis 30 000 mN aufweist, insbesondere zur Erzielung einer Handeinreißbarkeit eine Weiterreißfestigkeit im Bereich von 2000 mN bis 10000 mN, vorzugsweise im Bereich von 3000 mN bis 8000 mN.

22. Klebeband (1) nach einem der Ansprüche 1 bis 21,
**dadurch gekennzeichnet, dass** das Gewirk (5) laufmaschenfrei ist.

23. Klebeband (1) nach einem der Ansprüche 1 bis 22,
**dadurch gekennzeichnet, dass** die Schussfäden (7) in dem Gewirk (3) sich zumindest bereichsweise als Teilschuss über einen Teil (B1) der Breite (B) des Trägers (2) und/oder zumindest bereichsweise bevorzugt als Vollschuss über die gesamte Breite (B) des Trägers (2) erstrecken, wobei die Schussfaden (7) parallel oder diagonal zu den Maschenreihen (5a) oder als Kreuzschuss diagonal zu den Maschenreihen (5a) mit Richtungswechsel verlaufen.

24. Verwendung eines bandförmigen Trägers (2), der aus einem Gewirk (3) mit aus Garn (4) gebildeten Maschen (5) besteht und in Querrichtung (QR) parallel zueinander verlaufende Schussfäden (7) umfasst, welche in den Maschen (5) des Gewirks (3) gehalten sind, zur Herstellung eines auf sich selbst wickelbaren, quereinreißbaren, textilen technischen Klebebandes (1), wobei der Träger eine Dicke (D2) im Bereich von 0,05 mm bis 1,8 mm aufweist, und auf einer Seite mit einer druckempfindlichen Klebebeschichtung (6) versehen ist, welche mit einem spezifischen Flächengewicht im Bereich von 20 g/m² bis 300 g/m² unmittelbar auf den Träger (2) aufgebracht ist.

25. Verwendung eines Trägers (2) nach Anspruch 24,
**dadurch gekennzeichnet, dass** das Klebeband (1) eines oder mehrere Merkmale des kennzeichnenden Teils der Ansprüche 2 bis 23 aufweist.

26. Verwendung eines Trägers (2) nach Anspruch 24 oder 25,
**dadurch gekennzeichnet, dass** als Träger (2) ein solcher eingesetzt wird, der mittels eines Systems von Barren und Wirkelementen hergestellt ist, welches mindestens eine Einzelnadelbarre und eine Schieberbarre, eine Stechplatinenbarre, eine Abschlagplatinenbarre mit Abschlagblech, ein oder zwei Grundlegebarren, eine Stehfadenbarre, die als Lochnadel oder Platine ausgebildet ist, und eine Schusseinlegeplatinenbarre umfasst, oder der mittels eines Systems hergestellt ist, welches mindestens eine Einzelnadelbarre und Schieberbarre, eine Einschließ-Abschlagplatinenbarre, ein, zwei oder drei Grundlegebarren und eine Schusseinlegeplatinenbarre umfasst, wobei der Träger (2) als ein Nähgewirk mit offenen und/oder geschlossenen Maschen (5) hergestellt ist.

27. Verwendung eines Trägers (2) nach einem der Ansprüche 24 bis 26,
**dadurch gekennzeichnet, dass** als Träger (2) ein solcher eingesetzt wird, der ohne gummielastische oder elastomere Fäden (7) und/oder Garne (4) hergestellt ist und der insbesondere keine Grundierungsschicht für die Klebebeschichtung (6) aufweist, wobei der Träger (2) vorzugsweise ohne ein Waschen, wie ein Auswaschen von Spinnöl, ohne eine Thermofixierung und/oder ohne ein Kalandrieren hergestellt ist.

## Claims

1. Self-windable transversely tearable textile industrial adhesive tape (1) having a tape-shaped carrier (2) having a thickness (D2) in the range from 0.05 mm to 1.8 mm, consisting of a formed-loop knit (3) in which a yarn (4) is formed into knitted loops (5) and provided on one side a pressure-sensitive adhesive coating (6) applied directly to the carrier (2) at a specific mass per unit area in the range from 20 g/m² to 300 g/m²,
**characterized in that** the carrier (2) comprises weft threads (7) parallel to each other in the cross direction (QR) which are held in the knitted loops (5) of the formed-loop knit (3).

2. Adhesive tape (1) according to Claim 1,
**characterized in that** the formed-loop knit (3) of the carrier (2) is a warp knit where the weft threads (7) in the warp knit preferably extend at right angles to the warp direction.

3. Adhesive tape (1) according to Claim 1 or 2,
**characterized in that** the formed-loop knit (3) of the carrier (2) is a fibrous nonwoven web stitchbonded by the formation of knitted loops from the fibres of the web.

4. Adhesive tape (1) according to any one of Claims 1 to 3,
**characterized in that** the formed-loop knit (3) of the carrier (2) has a gauge in the range from E9, especially E18, to E44 according to DIN ISO 8188:2009-02.

5. Adhesive tape (1) according to any one of Claims 1 to 4,
**characterized in that** the carrier (2) has a specific mass per unit area in the range from 20 to 250 g/m², preferably in the range from 40 to 120 g/m², while a thickness (D2) of the carrier (2) is preferably in the range from 0.2 mm to 1.5 mm, more preferably in the range from 0.5 mm to 1.0 mm.

6. Adhesive tape (1) according to any one of Claims 1 to 5,
**characterized in that** the breaking strength in the longitudinal direction is not less than 15 N/cm and preferably in the range from 15 N/cm to 120 N/cm, more preferably in the range from 20 N/cm to 55 N/cm, while the breaking extension in the longitudinal direction is more particularly not greater than 60% and is preferably in the range from 10% to 50%, more preferably in the range from 15% to 25%.

7. Adhesive tape (1) according to any one of Claims 1 to 6,
**characterized in that** the recovery from a load short of eliciting the breaking extension is less than 50%, preferably less than 25% and more preferably less than 10% of the extension elicited by the load.

8. Adhesive tape (1) according to any one of Claims 1 to 7,
**characterized in that** the adhesive coating (6) consists of a natural or synthetic, rubber- and/or silicone- and/or acrylate-containing, preferably UV-crosslinkable, pressure-sensitive adhesive and its add-on on the carrier (2) is more particularly a grammage in the range from 20 g/m² to 300 g/m², preferably in the range from 40 g/m² to 120 g/m².

9. Adhesive tape (1) according to any one of Claims 1 to 8,
**characterized in that** its thickness (D) is in the range from about 0.05 mm to 2.5 mm.

10. Adhesive tape (1) according to any one of Claims 1 to 9,
**characterized in that** the carrier (2) has from 2 courses per cm to 20 courses per cm, preferably from about 4 courses per cm to 18 courses per cm, while the carrier (2) more particularly has from 2 wales per cm to 20 wales per cm, preferably from about 3 wales per cm to 15 wales per cm.

11. Adhesive tape (1) according to any one of Claims 1 to 10,
**characterized in that** the yarn (4) of the formed-loop knit (3) of the carrier (2) and/or the weft threads (7) of the carrier (2) consist of polyester fibres, preferably of polyethylene terephthalate (PET), or of other, specifically synthetic fibres, as of polyamide (PA), polyethylene (PE), polypropylene (PP), polyacrylic (PAK), polyacrylonitrile (PAN), viscose or cotton, or **in that** the yarn (4) is a blended-fibre yarn between synthetic fibres, as preferably of polyethylene terephthalate (PET) and polyamide (PA).

12. Adhesive tape (1) according to any one of Claims 1 to 11,
**characterized in that** the formed-loop knit (3) is constructed from a thread system (4a, 4b) numbering two or more threads.

13. Adhesive tape (1) according to any one of Claims 1 to 12, **characterized in that** the linear density of the yarn (4) of the formed-loop knit (3) is in the range from about 20 dtex to 167 dtex, particularly in the range from 30 to 100 dtex, more preferably in a range of less than 84 dtex, and specifically in the range from 40 to 80 dtex.

14. Adhesive tape (1) according to any one of Claims 1 to 13,
**characterized in that** the linear density of the weft threads (7) is in the range from 50 dtex to 1100 dtex, preferably in the range from 76 dtex to 800 dtex, more preferably in the range from 110 dtex to 600 dtex, while the number of weft threads (7) per unit length is preferably in the range from 5 to 100 threads per cm.

15. Adhesive tape (1) according to any one of Claims 1 to 14,
**characterized in that** the weft threads (7) consist of a flat yarn or are textured and/or intermingled, while the weft threads are more particularly (7) formed of a staple-fibre yarn or of a filament yarn, preferably of a monofilament yarn.

16. Adhesive tape (1) according to any one of Claims 1 to 15,
**characterized in that** the weft threads (7) are embedded in every row of courses and/or wales of the formed-loop knit (3), while more particularly specifically two or else more than two weft threads (7) pass through each of a number of knitted loops (5), preferably every knitted loop (5) of the formed-loop knit (3).

17. Adhesive tape (1) according to any one of Claims 1 to 16,
**characterized in that** the adhesive tape (1) in a test to EN 1939 displays an adhesion to steel in the range from 2.0 N/cm to 15 N/cm, preferably in the region of 4.0 N/cm to 10 N/cm and to backing in the range from 2.0 N/cm to 15.0 N/cm, preferably in the range from 3.0 N/cm to 8.0 N/cm.

18. Adhesive tape (1) according to any one of Claims 1 to 17,
**characterized in that** the carrier (2) in a test to DIN 53 887 at a test pressure of 100 Pa displays an air permeability in the range from 50 l/m²s to 6000 l/m²s, preferably in the range from 100 l/m²s to 4000 l/m²s.

19. Adhesive tape (1) according to any one of Claims 1 to 18,
**characterized in that** the adhesive tape (1) in a test to LV 312 displays a noise-dampening performance of not less than class B, preferably class C.

20. Adhesive tape (1) according to any one of Claims 1 to 19,
**characterized in that** the adhesive tape (1) in a test to LV 312 displays an abrasion resistance of not less than class B, preferably class C or D.

21. Adhesive tape (1) according to any one of Claims 1 to 20,
**characterized in that** the adhesive tape (1) in an Elmendorf test displays a tear resistance in the range from 2000 mN to 30 000 mN, more particularly, to obtain a manual tearability, a tear resistance in the range from 2000 mN to 10 000 mN, preferably in the range from 3000 mN to 8000 mN.

22. Adhesive tape (1) according to any one of Claims 1 to 21,
**characterized in that** the formed-loop knit (5) is free from laddering.

23. Adhesive tape (1) according to any one of Claims 1 to 22,
**characterized in that** the weft threads (7) in the formed-loop knit (3) extend, regionally at least, as a partial-width insert across a part (B1) of the width (B) of the carrier (2) and/or, regionally at least, preferably as a full-width insert across the full width (B) of the carrier (2), while the weft threads (7) run parallel or diagonally to the courses (5a) or as a crosswise insert diagonally to the courses (5a) by direction change.

24. Use of a tape-shaped carrier (2) consisting of a formed-loop knit (3) in which a yarn (4) is formed into knitted loops (5) and comprising weft threads (7) parallel to each other in the cross direction (QR) which are held in the knitted loops (5) of the formed-loop knit (3), in the manufacture of a self-windable transversely tearable textile industrial adhesive tape (1), the carrier having a thickness (D2) in the range from 0.05 mm to 1.8 mm, and provided on one side a pressure-sensitive adhesive coating (6) applied directly to the carrier (2) at a specific mass per unit area in the range from 20 g/m² to 300 g/m².

25. Use of a carrier (2) according to Claim 24,
**characterized in that** the adhesive tape (1) evinces one or more features of the characterizing part of Claims 2 to 23.

26. Use of a carrier (2) according to Claim 24 or 25,
**characterized in that** the carrier employed as carrier (2) is obtained using a system of bars and knitting elements which comprises at least one single needle bar and one tongue bar, a stitch sinker bar, a knock-over sinker bar with trick plate, one or two ground guide bars, a filler thread bar configured as guide or as a sinker pin, and a weft insertion sinker bar, or obtained using a system which comprises at least one single needle bar and tongue bar, a compound sinker bar, one, two or three ground guide bars and a weft insertion sinker bar, wherein the carrier (2) is obtained as a fibrous nonwoven web stitchbonded by the formation of open and/or closed knitted loops (5) from the fibres of the web.

27. Use of a carrier (2) according to any one of Claims 24 to 26, **characterized in that** the carrier employed as carrier (2) is obtained without rubber-elastic or elastomeric threads (7) and/or yarns (4) and having more particularly no priming layer for the adhesive coating (6), the carrier (2) preferably being obtained without any washing, as to wash off lubricating oil, without any heat-setting and/or without any calendering.

## Revendications

1. Ruban adhésif (1) textile technique enroulable sur lui-même et déchirable transversalement, comprenant un support en forme de bande (2) qui présente une épaisseur (D2) comprise dans l'intervalle de 0,05 mm à 1,8 mm, est constitué d'un tricot (3) ayant des mailles (5) formées en fil (4) et est pourvu sur un côté d'un revêtement collant (6) sensible à la pression qui est appliqué directement sur le support (2) avec un poids spécifique surfacique compris dans l'intervalle de 20 g/m2 à 300 g/m2,
**caractérisé en ce que** le support (2) comprend des fils de trame (7) s'étendant parallèlement les uns aux autres dans le sens transversal (QR) qui sont maintenus dans les mailles (5) du tricot (3).

2. Ruban adhésif (1) selon la revendication 1,
**caractérisé en ce que** le tricot (3) du support (2) est un tissu tricoté en chaîne, les fils de trame (7) compris dans le tissu tricoté en chaîne s'étendant de préférence perpendiculairement à la direction de chaîne.

3. Ruban adhésif (1) selon la revendication 1 ou 2,
**caractérisé en ce que** le tricot (3) du support (2) est un tricot cousu.

4. Ruban adhésif (1) selon l'une des revendications 1 à 3,
**caractérisé en ce que** le tricot (3) du support (2) présente une finesse comprise dans l'intervalle de E9, en particulier E18, à E44 selon la norme DIN ISO 8188:2009-02.

5. Ruban adhésif (1) selon l'une des revendications 1 à 4,
**caractérisé en ce que** le poids spécifique surfacique du support (2) est compris dans l'intervalle de 20 à 250 g/m2, et de préférence dans l'intervalle de 40 à 120 g/m2, une épaisseur (D2) du support (2) étant comprise de préférence dans l'intervalle de 0,2 mm à 1,5 mm, et de préférence dans l'intervalle de 0,5 mm à 1,0 mm.

6. Ruban adhésif (1) selon l'une des revendications 1 à 5,
**caractérisé en ce que** la résistance à la déchirure dans le sens longitudinal s'élève au moins à 15 N/cm et se situe de préférence dans l'intervalle de 15 N/cm à 120 N/cm, et particulièrement de préférence dans l'intervalle de 20 N/cm à 55 N/cm, l'allongement de rupture dans le sens longitudinal en particulier n'étant pas supérieur à 60 % et se situant de préférence dans l'intervalle de 10 % à 50 %, et particulièrement de préférence dans l'intervalle de 15 % à 25 %.

7. Ruban adhésif (1) selon l'une des revendications 1 à 6,
**caractérisé en ce que** lors d'une contrainte, si la contrainte est relâchée avant que l'allongement de rupture soit atteint, une déformation inverse de moins de 50 %, de préférence de moins de 25 %, et particulièrement de préférence de moins de 10 % de l'allongement atteint sous l'effet de la contrainte se produit.

8. Ruban adhésif (1) selon l'une des revendications 1 à 7,
**caractérisé en ce que** le revêtement collant (6) est constitué d'une colle de contact naturelle ou synthétique, contenant du caoutchouc et/ou du silicone et/ou de l'acrylate, de préférence réticulable aux UV et en particulier est appliqué sur le support (2) avec un grammage compris dans l'intervalle de 20 g/m2 à 300 g/m2, et de préférence de 40 g/m2 à 120 g/m2.

9. Ruban adhésif (1) selon l'une des revendications 1 à 8,
**caractérisé en ce que** son épaisseur (D) se situe dans l'intervalle d'environ 0,05 mm à 2,5 mm.

10. Ruban adhésif (1) selon l'une des revendications 1 à 9,
**caractérisé en ce que** le support (2) présente un nombre de rangées de mailles compris dans l'intervalle de 2 par cm à 20 par cm, et de préférence dans l'intervalle d'environ 4 par cm à 18 par cm, le support (2) présentant en particulier un nombre de colonnes compris dans l'intervalle de 2 par cm à 20 par cm, et de préférence dans l'intervalle d'environ 3 par cm à 15 par cm.

11. Ruban adhésif (1) selon l'une des revendications 1 à 10,
**caractérisé en ce que** le fil (4) du tricot (3) du support (2) et/ou les fils de trame (7) du support (2) sont constitués de fibres de polyester, de préférence de polyéthylène téréphtalate (PET), ou d'autres fibres, en particulier synthétiques, comme de polyamide (PA), polyéthylène (PE), polypropylène (PP), polyacrylate (PAK), polyacrylonitrile (PAN), viscose ou coton, ou **en ce que** le fil (4) est un fil constitué d'une combinaison de fibres synthétiques, comme de préférence le polyéthylène téréphtalate (PET) et le polyamide (PA).

12. Ruban adhésif (1) selon l'une des revendications 1 à 11,
**caractérisé en ce que** le tricot (3) est formé à partir d'un système à deux ou plusieurs fils (4a, 4b).

13. Ruban adhésif (1) selon l'une des revendications 1 à 12,
**caractérisé en ce que** la finesse du fil (4) du tricot (3) se situe dans l'intervalle d'environ 20 dtex à 167 dtex, en particulier dans l'intervalle de 30 à 100 dtex, particulièrement de préférence dans un intervalle inférieur à 84 dtex, et dans ce cadre, dans l'intervalle de 40 à 80 dtex.

14. Ruban adhésif (1) selon l'une des revendications 1 à 13,
**caractérisé en ce que** la finesse des fils de trame (7) se situe dans l'intervalle de 50 dtex à 1 100 dtex, de préférence dans l'intervalle de 76 dtex à 800 dtex, et particulièrement de préférence dans l'intervalle de 110 dtex à 600 dtex, la densité des fils de trame (7) se situant de préférence dans l'intervalle de 5 à 100 fils par cm.

15. Ruban adhésif (1) selon l'une des revendications 1 à 14,
**caractérisé en ce que** les fils de trame (7) sont constitués d'un fil lisse ou sont texturés et/ou entremêlés, les fils de trame en particulier (7) étant formés à partir d'un fil de fibres discontinues ou à partir d'un fil de filaments, de préférence à partir d'un fil monofilament.

16. Ruban adhésif (1) selon l'une des revendications 1 à 15,
**caractérisé en ce que** les fils de trame (7) sont intégrés dans chaque rangée de mailles et/ou rangée de colonnes du tricot (3), étant entendu qu'en particulier, un certain nombre de mailles (5), et de préférence toutes les mailes (5) du tricot (3), sont chacune traversées par en particulier deux fils de trame (7) ou davantage.

17. Ruban adhésif (1) selon l'une des revendications 1 à 16,
**caractérisé en ce que** le ruban adhésif (1) présente, dans un essai selon la norme EN 1939, une force de collage comprise dans l'intervalle de 2,0 N/cm à 15 N/cm, de préférence dans l'intervalle de 4,0 N/cm à 10 N/cm sur l'acier et dans l'intervalle de 2,0 N/cm à 15,0 N/cm, de préférence dans l'intervalle de 3,0 N/cm à 8,0 N/cm sur le dos du ruban.

18. Ruban adhésif (1) selon l'une des revendications 1 à 17,
**caractérisé en ce que** le support (2) présente, dans un essai selon la norme DIN 53 887 à une pression d'essai de 100 Pa, une perméabilité à l'air comprise dans l'intervalle de 50 1/mes à 6 000 1/mes, et de préférence dans l'intervalle de 100 1/m2s à 4 000 1/m2s.

19. Ruban adhésif (1) selon l'une des revendications 1 à 18,
**caractérisé en ce que** le ruban adhésif (1) présente, dans un essai selon la norme LV 312, une réduction du bruit d'au moins la catégorie B, et de préférence de la catégorie C.

20. Ruban adhésif (1) selon l'une des revendications 1 à 19,
**caractérisé en ce que** le ruban adhésif (1) présente, dans un essai selon la norme LV 312, une résistance à l'usure d'au moins la catégorie B, et de préférence de la catégorie C ou D.

21. Ruban adhésif (1) selon l'une des revendications 1 à 20,
**caractérisé en ce que** le ruban adhésif (1) présente, dans un test d'Elmendorf, une résistance à la déchirure comprise dans l'intervalle de 2 000 mN à 30 000 mN, en particulier, afin d'atteindre une aptitude à la déchirure à la main, une résistance à la déchirure comprise dans l'intervalle de 2 000 mN à 10 000 mN, et de préférence dans l'intervalle de 3 000 mN à 8 000 mN.

22. Ruban adhésif (1) selon l'une des revendications 1 à 21,
**caractérisé en ce que** le tricot (5) est dénué de mailles filées.

23. Ruban adhésif (1) selon l'une des revendications 1 à 22,
**caractérisé en ce que** les fils de trame (7) compris dans le tricot (3) s'étendent au moins par endroits en tant que trame partielle sur une partie (B1) de la largeur (B) du support (2) et/ou au moins par endroits, de préférence, en tant que trame complète sur la largeur (B) complète du support (2), étant entendu que les fils de trame (7) s'étendent parallèlement ou diagonalement aux rangées de mailles (5a), ou en tant que trame croisée, diagonalement aux rangées de mailles (5a) avec un changement de direction.

24. Utilisation d'un support en forme de bande (2), qui est constitué d'un tricot (3) ayant des mailles (5) formées en fil (4) et comprend des fils de trame (7) s'étendant parallèlement les uns aux autres dans le sens transversal (QR) qui sont maintenues dans les mailles (5) du tricot (3), aux fins de la fabrication d'un ruban adhésif (1) textile technique enroulable sur lui-même et déchirable transversalement, étant entendu que le support présente une épaisseur (D2) comprise dans l'intervalle de 0,05 mm à 1,8 mm et qu'il est muni sur un côté d'un revêtement collant (6) sensible à la pression qui est appliqué directement sur le support (2) avec un poids spécifique surfacique compris dans l'intervalle de 20 g/m2 à 300 g/m2.

25. Utilisation d'un support (2) selon la revendication 24,
**caractérisée en ce que** le ruban adhésif (1) présente une ou plusieurs caractéristiques de la partie caractérisante des revendications 2 à 23.

26. Utilisation d'un support (2) selon la revendication 24 ou 25,
**caractérisée en ce qu**'on utilise comme support (2) un support qui est fabriqué au moyen d'un système de barres et d'éléments de tricotage qui comprend au moins une barre individuelle à aiguille et une barre à languette, une barre à platine de piqûre, une barre à platine d'abattage avec une tôle d'abattage, une ou deux barres de bouclage de base, une barre de fil droit qui est réalisée comme aiguille à trou ou platine, et une barre à platine d'insertion de trame ou qui est fabriqué au moyen d'un système qui comprend au moins une barre individuelle à aiguille et une barre à languette, une barre à platine d'abattage d'insertion, une, deux ou trois barres de bouclage de base et une barre à platine d'insertion de trame, étant entendu que le support (2) est fabriqué comme un tricot cousu ayant des mailles (5) ouvertes et/ou fermées.

27. Utilisation d'un support (2) selon l'une des revendications 24 à 26,
**caractérisée en ce qu**'on utilise comme support (2) un support qui est fabriqué sans fils de trame (7) et/ou fils (4) élastiques ou élastomères, et en particulier, qui ne présente pas de couche d'apprêt pour le revêtement collant (6), étant entendu que le support (2) est de préférence fabriqué sans lavage, comme un lavage de l'huile à filer, sans thermofixation et/ou sans calandrage.
